# EUROPEAN PATENT APPLICATION

(11) **EP 4 617 575 A1**
(43) Date of publication of application: **17.09.2025**
(21) Application number: 23919327.9
(22) Date of filing: 19.09.2023
(51) Int. Cl.: F24F 1/0057, F24F 13/14, F24F 13/00, F24F 11/79, F24F 11/65

(54) **AIR CONDITIONER**

(30) Priority: 31.01.2023 CN 202320210737 U
(71) Applicant: Ningbo Aux Electric Co., Ltd., Ningbo, Zhejiang 315191 (CN); Aux Air Conditioner Co., Ltd., Ningbo, Zhejiang 315191 (CN)
(72) Inventor: TIAN, Zhen, Ningbo, Zhejiang 315191 (CN); SHANG, Bin, Ningbo, Zhejiang 315191 (CN); ZHU, Yongqiang, Ningbo, Zhejiang 315191 (CN); SHANG, Zhuxian, Ningbo, Zhejiang 315191 (CN)
(74) Representative: Gamba, Alessandro
(86) International application number: PCT/CN2023/119804
(87) International publication number: WO 2024/159763

(57) **Abstract**

The present invention relates to the technical field of air conditioners. Provided is an air conditioner. The air conditioner comprises an air-conditioner main body, a first air deflector and a second air deflector. The air-conditioner main body is provided with an air output channel for air to be output in a first direction. The first air deflector is rotatably arranged in the air output channel, and has a first rotating shaft. The second air deflector is rotatably arranged in the air output channel, and has a second rotating shaft. A projection of the first rotating shaft in the first direction and a projection of the second rotating shaft in the first direction are configured in a staggered manner. By means of the air conditioner provided in the present invention, the problem of direct blowing to a user due to the blowing of part of an airflow between the two air deflectors in the prior art can be improved.

## Description

The present invention claims the priority to the Chinese patent application with the filing No. CN202320210737.0 filed with the Chinese Patent Office on January 31, 2023, the contents of which are incorporated herein by reference in entirety.

### Technical Field

The present invention relates to the technical field of air conditioners, in particular to an air conditioner.

### Background Art

In the prior art, some air conditioners use multiple air deflectors at the air outlet to guide airflow. However, when controlling the air deflectors, the gap between two air deflectors is typically too large, causing part of the airflow to be blown out directly through the gap between the two air deflectors, reducing user comfort.

### Summary

The problem solved by the present invention is direct air blowing toward users caused by part of the airflow escaping between the two air deflectors in the prior art.

To solve the above-mentioned problem, the present invention provides an air conditioner, including:
an air-conditioner main body provided with an air discharge channel for discharging air along a first direction;
a first air deflector rotatably arranged in the air discharge channel, the first air deflector having a first rotating shaft; and
a second air deflector rotatably arranged in the air discharge channel, the second air deflector having a second rotating shaft, wherein
a connecting line perpendicular to both the first rotating shaft and the second rotating shaft forms an acute angle with the first direction.

Compared with the prior art, the beneficial effects of the air conditioner provided by the present invention is as follows.

In the air conditioner provided by the present invention, the connecting line perpendicular to both the first rotating shaft and the second rotating shaft forms an acute angle with the first direction, which is manifested as the projection misalignment of the first rotating shaft of the first air deflector and the second rotating shaft of the second air deflector in the first direction. It can also be regarded as the first and second air deflectors being staggered in the first direction. Thus, in the air discharge direction of the air discharge channel, the first and second air deflectors can readily abut or overlap while avoiding mutual interference, facilitating the elimination of the gap between the first and second air deflectors, and further preventing the airflow in the air discharge direction of the air discharge channel from being guided by the first and second air deflectors, thereby preventing direct blowing of the airflow to users. Thereby, the problem of direct air blowing toward users caused by part of the airflow escaping between the two air deflectors in the prior art is resolved.

Optionally, the first rotating shaft is parallel to the second rotating shaft.

Arranging the first rotating shaft and the second rotating shaft to be parallel to each other facilitates the positioning of the first and second air deflectors, prevents excessive overlap of the first and second air deflectors in the first direction, and thereby ensures that the first and second air deflectors have a large wind-receiving area.

Optionally, when neither the first air deflector nor the second air deflector is installed, the wind direction of the airflow led out by the air discharge channel is the first direction.

Optionally, the included angle formed by the connecting line and the first direction is 50° to 70°.

Arranging the included angle between the connecting line and the first direction within the range of 50° to 70° prevents the first and second air deflectors from occupying too much space, causing an increase in the overall volume of the air conditioner, and facilitates the arrangement of the first and second air deflectors.

Optionally, a second direction forms an acute angle with the first direction, a third direction forms an acute angle with the first direction, and the second direction is perpendicular to the third direction.

The projection of the first air deflector on the straight line in the second direction is joined with or at least partially overlapped with the projection of the second air deflector on the straight line in the second direction; and/or the projection of the first air deflector on the straight line in the third direction is joined with or at least partially overlapped with the projection of the second air deflector on the straight line in the third direction.

Further, arranging the first and second air deflectors to be joined or overlapped in the second direction and/or the third direction eliminates the gap between the first and second air deflectors in the second direction and/or the third direction, thereby preventing airflow from directly blowing out through the gap between the first and second air deflectors, avoiding direct blowing toward users, and improving the air supply effect.

Optionally, the second direction is a horizontal direction, and the third direction is a vertical direction.

Optionally, the first air deflector is arc-shaped, and/or the second air deflector is arc-shaped.

Arranging the first air deflector and/or the second air deflector in an arc shape increases the air-deflecting area within the limited air discharge area of the air discharge channel, facilitating long-distance air supply.

Optionally, a convex first air-deflecting surface is formed on the outer side of the first air deflector, and a concave second air-deflecting surface is formed on the inner side of the first air deflector; and/or
a convex third air-deflecting surface is formed on the outer side of the second air deflector, and a concave fourth air-deflecting surface is formed on the inner side of the second air deflector.

By respectively arranging the first air-deflecting surface and the second air-deflecting surface on the outer and inner sides of the first air deflector, and/or arranging the third air-deflecting surface and the fourth air-deflecting surface on the outer and inner sides of the second air deflector, airflow can be guided through different air-deflecting surfaces when the first and second air deflectors rotate to different postures, thereby providing more air supply modes to meet the diverse air supply needs of users.

Optionally, the first air deflector is provided with a first through hole for leading out airflow; and/or
the second air deflector is provided with a second through hole for leading out airflow.

Arranging a first through hole on the first air deflector and a second through hole on the second air deflector allows air to be discharged through the first and second through holes when the first and second air deflectors close the air discharge channel, thereby dispersing the outlet airflow through the first and second through holes to achieve a zero-draft-sensation air discharge mode.

Optionally, the rotation range of the first air deflector does not exceed the outer contour of the air-conditioner main body; and/or
the rotation range of the second air deflector does not exceed the outer contour of the air-conditioner main body.

### Brief Description of Drawings

FIG. 1 is a schematic structural diagram of an air conditioner provided in an embodiment of the present invention;
FIG. 2 is a schematic structural diagram of the air conditioner in a zero-draft-sensation mode provided in an embodiment of the present invention;
FIG. 3 is a schematic structural diagram of the air conditioner in an annular airflow mode provided in an embodiment of the present invention;
FIG. 4 is a schematic structural diagram of the air conditioner in a heating mode provided in an embodiment of the present invention;
FIG. 5 is a schematic structural diagram of the air conditioner in a cooling mode provided in an embodiment of the present invention; and
FIG. 6 is a schematic structural diagram of the air conditioner in an air-sweeping mode provided in an embodiment of the present invention.

### Reference numerals:

10- Air conditioner; 11-Air-conditioner main body; 12- Air discharge channel; 13- First air deflector; 14- Second air deflector; 100- First rotating shaft; 101-First air-deflecting surface; 102- Second air-deflecting surface; 103-Connecting line; 104- Included angle; 200- Second rotating shaft; 201- Third air-deflecting surface; 202- Fourth air-deflecting surface.

### Detailed Description of Embodiments

To make the above-mentioned objectives, features, and advantages of the present invention more clearly understandable, specific embodiments of the present invention will be described in detail below with reference to the accompanying drawings.

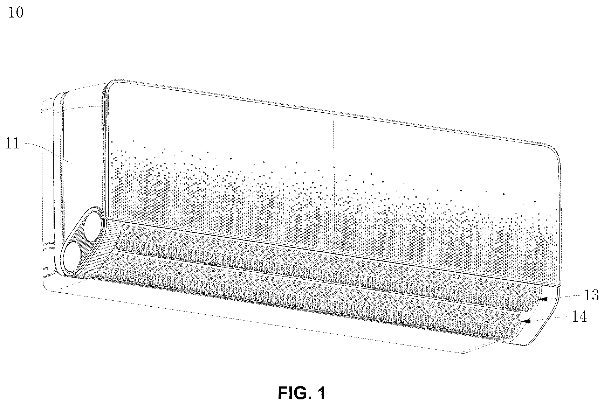

Referring to FIG. 1, an embodiment of the present invention provides an air conditioner 10 that can be installed in a designated region. When the air conditioner 10 is in operation, it can introduce airflow into the designated region to provide air conditioning to the designated region through the introduced airflow. The air conditioning functions include, but are not limited to, temperature regulation, humidity regulation, fresh air supply, sterilization and dust removal, and airflow speed regulation.

It should be noted that generally, an air conditioner includes an indoor unit and an outdoor unit. The indoor unit is installed inside the designated region, and the outdoor unit is installed outside the designated region. The indoor and outdoor units of the air conditioner are connected to form a refrigerant circulation loop. When the indoor and outdoor units of the air conditioner are in operation, the refrigerant circulates in the refrigerant circulation loop, and the indoor unit can introduce airflow into the designated region to provide air conditioning to the designated region. It should be noted that in the embodiments of the present invention, "air conditioner 10" generally refers to the indoor unit of the air conditioner.

In the prior art, to improve the air-deflecting effect, some air conditioners use multiple air deflectors at the air outlet to enhance the air supply effect. However, typically, the gap between two air deflectors is too large, causing part of the airflow to be blown out directly through the gap between the two air deflectors, which in turn causes the airflow to blow directly at users, reducing the user experience.

To address the above-mentioned technical problem, in other words, to address the problem of direct air blowing toward users caused by part of the airflow escaping between the two air deflectors in the prior art, the air conditioner 10 of the present invention is provided.

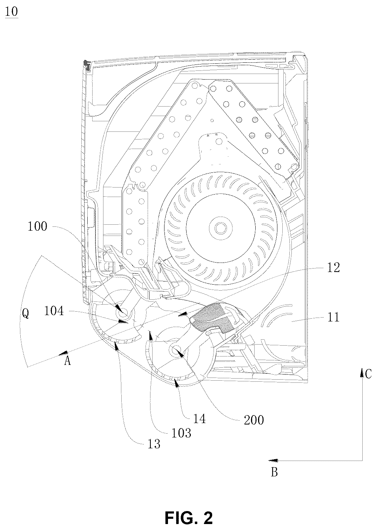

Referring to FIGS. 1 and 2, in this embodiment, the air conditioner 10 includes an air-conditioner main body 11, a first air deflector 13, and a second air deflector 14. The air-conditioner main body 11 is provided with an air discharge channel 12 for discharging air along a first direction. That is, the air discharge channel 12 can discharge air along the first direction, causing the airflow to flow in the first direction. The first air deflector 13 is rotatably arranged in the air discharge channel 12, and the first air deflector 13 has a first rotating shaft 100. The second air deflector 14 is rotatably arranged in the air discharge channel 12, and the second air deflector 14 has a second rotating shaft 200. The first air deflector 13 may rotate around the first rotating shaft 100, allowing the first air deflector 13 to open or block part of the air discharge channel 12, and the second air deflector 14 may rotate around the second rotating shaft 200, allowing the second air deflector 14 to open or block part of the air discharge channel 12. Thus, the air discharge mode of the air discharge channel 12 can be adjusted to achieve multiple air supply modes. The projection of the first rotating shaft 100 in the first direction is misaligned with the projection of the second rotating shaft 200 in the first direction. Additionally, the first direction may also be regarded as the direction of the airflow led out by the air discharge channel 12 when the first air deflector 13 and the second air deflector 14 are not installed.

Based on this, the projection misalignment of the first rotating shaft 100 of the first air deflector 13 and the second rotating shaft 200 of the second air deflector 14 in the first direction may also be regarded as the first air deflector 13 and the second air deflector 14 being staggered in the first direction. Thus, in the air discharge direction of the air discharge channel 12, the first air deflector 13 and the second air deflector 14 can readily abut or overlap while avoiding mutual interference, facilitating the elimination of the gap between the first air deflector 13 and the second air deflector 14, and further preventing the airflow in the air discharge direction of the air discharge channel 12 from being guided by the first air deflector 13 and the second air deflector 14, thereby preventing direct blowing of the airflow to users. This addresses the problem of direct air blowing toward users caused by part of the airflow escaping between the two air deflectors in the prior art.

It should be noted that if the first air deflector 13 and the second air deflector 14 are arranged in parallel in the first direction, a gap will inevitably be formed between the first air deflector 13 and the second air deflector 14 to prevent the first air deflector 13 and the second air deflector 14 from interfering with each other, resulting in the situation of direct air blowing through the gap in the prior art, causing direct blowing toward users. However, if the first air deflector 13 and the second air deflector 14 are staggered in the first direction, the first air deflector 13 and the second air deflector 14 can be brought closer to each other, so that their projections along the first direction can be joined or at least partially overlapped, eliminating the gap between the first air deflector 13 and the second air deflector 14, and thus addressing the problem of direct air blowing toward users caused by part of the airflow escaping between the two air deflectors in the prior art, causing direct blowing toward users.

Additionally, in this embodiment, the first rotating shaft 100 is parallel to the second rotating shaft 200, and the first rotating shaft 100 is perpendicular to the first direction. Arranging the first rotating shaft 100 and the second rotating shaft 200 to be parallel to each other facilitates the positioning of the first air deflector 13 and the second air deflector 14, prevents excessive overlap of the first air deflector 13 and the second air deflector 14 in the first direction, and thereby ensures that the first air deflector 13 and the second air deflector 14 have a large wind-receiving area. At the same time, it also prevents a situation where the first air deflector 13 and the second air-deflecting surface 102 are overlapped on one end in the first direction while a gap is formed on the other end, thereby facilitating the arrangement of the first air deflector 13 and the second air deflector 14. Arranging the first rotating shaft 100 and the second rotating shaft 200 to be perpendicular to the first direction not only facilitates the arrangement of the first air deflector 13 and the second air deflector 14, but also reduces the overall volume of the first air deflector 13 and the second air deflector 14 when the wind-receiving area is the same, thereby facilitating the reduction of the overall volume of the air conditioner 10.

It should be understood that in other embodiments of the present invention, the first rotating shaft 100 and the second rotating shaft 200 may be arranged to form an acute angle with the first direction to facilitate avoiding other components in the air conditioner 10 or adapting to the air-conditioner main body 11 in actual production.

In this embodiment, the straight line perpendicular to both the first rotating shaft 100 and the second rotating shaft 200 is the connecting line 103. Based on this, the staggered arrangement of the first air deflector 13 and the second air deflector 14 in the first direction may also be regarded as the connecting line 103 forming an acute angle with the first direction. Thus, the problem of direct air blowing toward users caused by part of the airflow escaping between the two air deflectors in the prior art can be addressed.

Optionally, the included angle 104 formed by the connecting line 103 and the first direction is 50° to 70°. In other words, the value of the included angle 104 formed by the connecting line 103 and the first direction may be 50°, 51°, 52°, 53°, 54°, 55°, 56°, 57°, 58°, 59°, 60°, 61°, 62°, 63°, 64°, 65°, 66°, 67°, 68°, 69°, or 70°, etc. The included angle 104 between the connecting line 103 and the first direction is preferably 56°. In FIG. 2, the connecting line 103 is indicated by a dashed line between the first rotating shaft 100 and the second rotating shaft 200, and the included angle 104 between the connecting line 103 and the first direction is denoted by Q.

Arranging the included angle 104 between the connecting line 103 and the first direction within the range of 50° to 70° prevents the first air deflector 13 and the second air deflector 14 from occupying excessive space, causing an increase in the overall volume of the air conditioner 10, and facilitates the arrangement of the first air deflector 13 and the second air deflector 14.

Optionally, the embodiments of the present invention further define a second direction and a third direction, where the second direction forms an acute angle with the first direction, the third direction forms an acute angle with the first direction, and the second direction is perpendicular to the third direction. To further prevent airflow from directly blowing out through the gap between the first air deflector 13 and the second air deflector 14, the projection of the first air deflector 13 on the straight line in the second direction is joined with or at least partially overlapped with the projection of the second air deflector 14 on the straight line in the second direction; and/or the projection of the first air deflector 13 on the straight line in the third direction is joined with or at least partially overlapped with the projection of the second air deflector 14 on the straight line in the third direction. Further, arranging the first air deflector 13 and the second air deflector 14 to be joined or overlapped in the second direction and/or the third direction eliminates the gap between the first air deflector 13 and the second air deflector 14 in the second direction and/or the third direction, thereby preventing airflow from directly blowing out through the gap between the first air deflector 13 and the second air deflector 14, avoiding direct blowing toward users, and improving the air supply effect.

Here, "and/or" means that only the projection of the first air deflector 13 on the straight line in the second direction may be joined with or at least partially overlap the projection of the second air deflector 14 on the straight line in the second direction; or only the projection of the first air deflector 13 on the straight line in the third direction may be joined with or at least partially overlap the projection of the second air deflector 14 on the straight line in the third direction; or the projection of the first air deflector 13 on the straight line in the second direction is joined with or at least partially overlapped with the projection of the second air deflector 14 on the straight line in the second direction, and the projection of the first air deflector 13 on the straight line in the third direction is joined with or at least partially overlapped with the projection of the second air deflector 14 on the straight line in the third direction.

It should be noted that in this embodiment, when the projections of the first air deflector 13 and the second air deflector 14 in both the second and third directions are joined or at least partially overlapped, there is no gap between the first air deflector 13 and the second air deflector 14 when viewed from either the second or third direction. Based on this, it is ensured that the airflow led out from the air discharge channel 12 is guided by either the first air deflector 13 or the second air deflector 14 to lead the airflow out in a specified direction, addressing the problem in the prior art where part of the airflow directly blows out from the gap between two air deflectors, causing direct blowing toward users.

Additionally, the joining of the projections of the first air deflector 13 and the second air deflector 14 on the straight line in the second direction means that the projection of the first air deflector 13 and the projection of the second air deflector 14 on the straight line in the second direction are exactly spliced into one piece, which may also be regarded as the projections of the first air deflector 13 and the second air deflector 14 being in a connected state. Similarly, the joining of the projections of the first air deflector 13 and the second air deflector 14 in the third direction means that the projection of the first air deflector 13 and the projection of the second air deflector 14 on the straight line in the third direction are exactly spliced into one piece, which may also be regarded as the projections of the first air deflector 13 and the second air deflector 14 being in a connected state.

It should be understood that in other embodiments of the present invention, the above-mentioned arrangement in which the projections of the first air deflector 13 and the second air deflector 14 in the second direction and/or the third direction are joined or at least partially overlapped may be omitted.

Optionally, in some embodiments of the present invention, taking the normal installation of the air conditioner 10 in a designated space as an example, the second direction may be a horizontal direction, and the third direction may be a vertical direction. That is, in the case of taking FIG. 2 as an example, the direction indicated by arrow A in the figure is the first direction, the direction indicated by arrow B is the second direction, and the direction indicated by arrow C is the third direction.

Of course, in other embodiments of the present invention, if the placement posture of the air conditioner 10 changes, the second direction and the third direction may also change accordingly. For example, if the air conditioner 10 is placed on the ground such that the installation surface of the air conditioner 10 is attached to the ground, the second direction may be a vertical direction, and the third direction may be a horizontal direction.

In this embodiment, the first air deflector 13 is arc-shaped, and/or the second air deflector 14 is arc-shaped. Arranging the first air deflector 13 and/or the second air deflector 14 in an arc shape increases the air-deflecting area within the limited air discharge area of the air discharge channel 12, facilitating long-distance air supply.

Here, "and/or" means that only the first air deflector 13 may be bent in an arc shape, only the second air deflector 14 may be bent in an arc shape, or both the first air deflector 13 and the second air deflector 14 may be bent in an arc shape.

In this embodiment, an example where both the first air deflector 13 and the second air deflector 14 are bent in an arc shape is described. Under the condition that both the first air deflector 13 and the second air deflector 14 are bent in an arc shape, when both the first air deflector 13 and the second air deflector 14 rotate to open the air discharge channel 12, the airflow led out from the air discharge channel 12 is guided by the arc-shaped side surfaces of the first air deflector 13 and the second air deflector 14. On the premise that the widths of the first air deflector 13 and the second air deflector 14 are fixed, the arc-shaped air-deflecting surfaces can extend the air-deflecting distance, increase the air-deflecting area, and facilitate the realization of long-distance air supply.

Additionally, in this embodiment, a convex first air-deflecting surface 101 is formed on the outer side of the first air deflector 13, and a concave second air-deflecting surface 102 is formed on the inner side of the first air deflector 13; and/or a convex third air-deflecting surface 201 is formed on the outer side of the second air deflector 14, and a concave fourth air-deflecting surface 202 is formed on the inner side of the second air deflector 14.

Here, "and/or" means that only the first air-deflecting surface 101 and the second air-deflecting surface 102 may be formed on the first air deflector 13; only the third air-deflecting surface 201 and the fourth air-deflecting surface 202 may be formed on the second air deflector 14; or the first air-deflecting surface 101 and the second air-deflecting surface 102 may be formed on the first air deflector 13, and the third air-deflecting surface 201 and the fourth air-deflecting surface 202 may be formed on the second air deflector 14. It should be noted that if only the first air deflector 13 is bent in an arc shape, only the first air-deflecting surface 101 and the second air-deflecting surface 102 may be formed on the first air deflector 13; if only the second air deflector 14 is bent in an arc shape, only the third air-deflecting surface 201 and the fourth air-deflecting surface 202 may be formed on the second air deflector 14; of course, if both the first air deflector 13 and the second air deflector 14 are bent in an arc shape, then the first air-deflecting surface 101 and the second air-deflecting surface 102 may be formed on the first air deflector 13, and the third air-deflecting surface 201 and the fourth air-deflecting surface 202 may be formed on the second air deflector 14.

By respectively arranging the first air-deflecting surface 101 and the second air-deflecting surface 102 on the outer and inner sides of the first air deflector 13, and/or arranging the third air-deflecting surface 201 and the fourth air-deflecting surface 202 on the outer and inner sides of the second air deflector 14, airflow can be guided through different air-deflecting surfaces when the first air deflector 13 and the second air deflector 14 rotate to different postures, thereby providing more air supply modes to meet the diverse air supply needs of users.

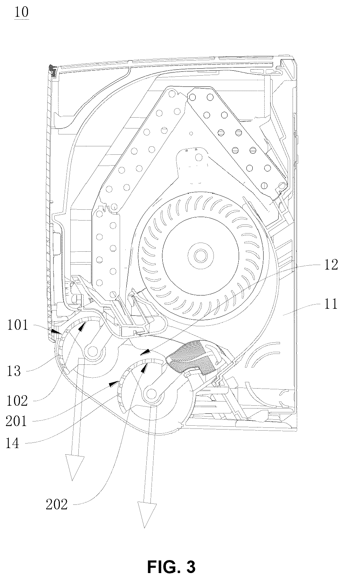

In the following, the examples shown in FIGS. 3 to 6 are configured for description, and the hollow arrows in FIGS. 3 to 6 indicate the flow direction of the airflow.

For example, referring to FIG. 3, at this time, both the first air deflector 13 and the second air deflector 14 rotate upward by a certain amplitude, allowing part of the airflow to be led out between the first air deflector 13 and the second air deflector 14, and another part of the airflow to be led out from below the second air deflector 14. The airflow flowing out from the middle part can be directly guided by the second air-deflecting surface 102 of the first air deflector 13 and, based on the Coanda effect, guided by the third air-deflecting surface 201 of the second air deflector 14. The airflow led out from below the second air deflector 14 can be directly guided by the fourth air-deflecting surface 202 of the second air deflector 14. That is, the airflow is led out in a downward manner, referred to as the annular airflow mode.

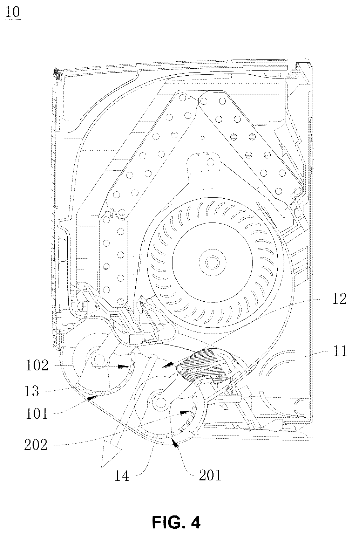

For another example, referring to FIG. 4, at this time, both the first air deflector 13 and the second air deflector 14 rotate downward by a large amplitude, causing most of the airflow to be led out between the first air deflector 13 and the second air deflector 14. At this time, the airflow is guided by the first air-deflecting surface 101 based on the Coanda effect and simultaneously directly guided by the fourth air-deflecting surface 202, causing the airflow to be led out in a downward-biased direction. That is, the airflow is led out in a downward-biased manner, referred to as the heating mode, which facilitates the landing of the airflow in the heating mode and improves the heating effect in the designated region.

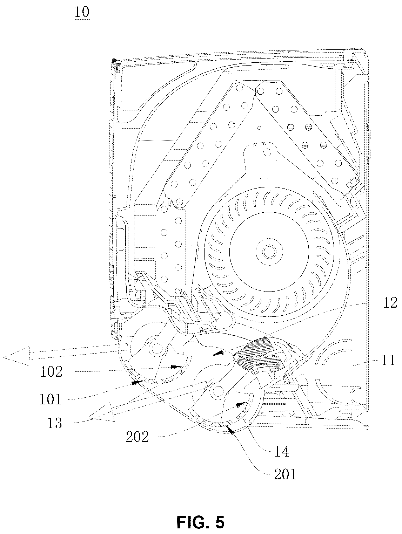

For another example, referring to FIG. 5, at this time, both the first air deflector 13 and the second air deflector 14 rotate downward by a small amplitude, allowing part of the airflow to be led out between the first air deflector 13 and the second air deflector 14, and another part of the airflow to be led out from above the first air deflector 13. The airflow led out from the middle is guided by the first air-deflecting surface 101 based on the Coanda effect and simultaneously guided by the fourth air-deflecting surface 202. The airflow led out from above the first air deflector 13 is guided by the second air-deflecting surface 102. That is, the airflow is led out in a forward manner, referred to as the cooling mode, which facilitates the effect of cold air not blowing directly on people in the cooling mode, and improves the user experience.

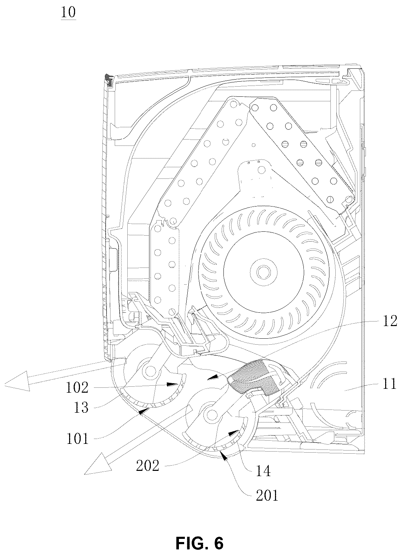

For another example, referring to FIG. 6, at this time, the rotation amplitude of the first air deflector 13 and the second air deflector 14 is between that of the cooling mode and the heating mode, allowing part of the airflow to be led out between the first air deflector 13 and the second air deflector 14, and another part of the airflow to be led out from above the first air deflector 13. The airflow led out from the middle is guided by the first air-deflecting surface 101 based on the Coanda effect and simultaneously guided by the fourth air-deflecting surface 202. The airflow led out from above the first air deflector 13 is guided by the second air-deflecting surface 102. Since the rotation amplitude of the first air deflector 13 and the second air deflector 14 is larger than that in the cooling mode, the airflow deflects downward relative to the cooling mode, referred to as the air-sweeping mode. This facilitates air sweeping during cooling or heating, increases the air discharge area of the air discharge channel 12, and improves cooling or heating efficiency.

Additionally, in the embodiments of the present invention, the first air deflector 13 is provided with a first through hole (not shown in the figure) for leading out airflow; and/or the second air deflector 14 is provided with a second through hole (not shown in the figure) for leading out airflow. Here, "and/or" means that only the first air deflector 13 may be provided with a first through hole; only the second air deflector 14 may be provided with a second through hole; or the first air deflector 13 may be provided with a first through hole, and the second air deflector 14 may be provided with a second through hole.

Arranging a first through hole on the first air deflector 13 and a second through hole on the second air deflector 14 allows air to be discharged through the first and second through holes when the first and second air deflectors close the air discharge channel 12, thereby dispersing the outlet airflow through the first and second through holes to achieve a zero-draft-sensation air discharge mode. In other words, as shown in FIG. 2, when both the first air deflector 13 and the second air deflector 14 close the air discharge channel 12, airflow can be led out through the first and second through holes, causing the airflow to be dispersed after passing through the first and second air deflectors, greatly weakening the intensity of the airflow and reducing the air supply distance, so that users can hardly feel the airflow, achieving a zero-draft-sensation mode.

Based on this, by arranging the first air deflector 13 and the second air deflector 14 in an arc shape and controlling the first air deflector 13 and the second air deflector 14 to rotate with different amplitudes, at least the above-mentioned multiple air supply modes can be achieved, and the air discharge mode of the air conditioner 10 can be switched between multiple modes. The air discharge mode and air supply distance of the air conditioner 10 can be adjusted according to the actual needs of users, thereby meeting the diverse air supply needs of users and improving the user experience.

Additionally, in this embodiment, the rotation range of the first air deflector 13 and/or the rotation range of the second air deflector 14 does not exceed the outer contour of the air-conditioner main body 11, and the outer contour of the air-conditioner main body 11 may also be regarded as the outer contour defined by the casing of the air-conditioner main body 11. Based on this, the first air deflector 13 and the second air deflector 14 can be prevented from being affected by external objects during rotation, ensuring the rotational stability of the first air deflector 13 and the second air deflector 14. Additionally, it can prevent the first air deflector 13 and/or the second air deflector 14 from guiding external airflow into the air discharge channel 12, causing airflow turbulence, so as to avoid impacts on the air discharge effect, and ensure effective air discharge by the air conditioner 10.

It should be noted that "and/or" means: only the rotation range of the first air deflector 13 relative to the air-conditioner main body 11 does not exceed the outer contour of the air-conditioner main body 11; only the rotation range of the second air deflector 14 relative to the air-conditioner main body 11 does not exceed the outer contour of the air-conditioner main body 11; or both the rotation range of the first air deflector 13 and the rotation range of the second air deflector 14 do not exceed the outer contour of the air-conditioner main body 11.

In summary, in the air conditioner 10 provided in the embodiments of the present invention, the projection misalignment of the first rotating shaft 100 of the first air deflector 13 and the second rotating shaft 200 of the second air deflector 14 in the first direction may also be regarded as the first air deflector 13 and the second air deflector 14 being staggered in the first direction. Thus, in the air discharge direction of the air discharge channel 12, the first air deflector 13 and the second air deflector 14 can readily abut or overlap while avoiding mutual interference between the first air deflector 13 and the second air deflector 14, facilitating the elimination of the gap between the first air deflector 13 and the second air deflector 14, and further preventing the airflow in the air discharge direction of the air discharge channel 12 from being guided by the first air deflector 13 and the second air deflector 14, thereby preventing direct blowing of the airflow to users. This addresses the problem of direct air blowing toward users caused by part of the airflow escaping between the two air deflectors in the prior art. Making the projections of the first air deflector 13 and the second air deflector 14 in both the second and third directions joined or at least partially overlapped further prevents part of the airflow from directly blowing out through the gap between the second air deflector 14 and the third air deflector, further addressing the problem of direct air blowing toward users caused by part of the airflow escaping between the two air deflectors in the prior art. Additionally, by arranging both the first air deflector 13 and the second air deflector 14 in an arc shape, multiple air discharge modes can be achieved by controlling the rotation amplitude of the first air deflector 13 and the second air deflector 14 relative to the air-conditioner main body 11, facilitating users to switch between multiple air discharge modes according to actual needs, meeting the diverse air supply needs of users, and improving the user experience.

Although the present invention is disclosed as above, it is still not limited thereto. Any person skilled in the art may make various changes and modifications without departing from the spirit and scope of the present invention, so the protection scope of the present invention shall be subject to the scope defined by the claims.

## Claims

1. An air conditioner, **characterized by** comprising:
an air-conditioner main body (11) provided with an air discharge channel (12) for discharging air along a first direction;
a first air deflector (13) rotatably arranged in the air discharge channel (12), the first air deflector (13) having a first rotating shaft (100); and
a second air deflector (14) rotatably arranged in the air discharge channel (12), the second air deflector (14) having a second rotating shaft (200), wherein
a connecting line (103) perpendicular to both the first rotating shaft (100) and the second rotating shaft (200) forms an acute angle with the first direction.

2. The air conditioner according to claim 1, wherein the first rotating shaft (100) is parallel to the second rotating shaft (200).

3. The air conditioner according to claim 2, wherein when neither the first air deflector (13) nor the second air deflector (14) is installed, a wind direction of airflow led out by the air discharge channel (12) is the first direction.

4. The air conditioner according to claim 1, wherein an included angle (104) formed by the connecting line (103) and the first direction ranges from 50° to 70°.

5. The air conditioner according to any one of claims 1 to 4, wherein a second direction forms an acute angle with the first direction, a third direction forms an acute angle with the first direction, and the second direction is perpendicular to the third direction; and
a projection of the first air deflector (13) onto a straight line along the second direction is joined or at least partially overlapped with a projection of the second air deflector (14) onto the straight line along the second direction; and/or a projection of the first air deflector (13) onto a straight line along the third direction is joined or at least partially overlapped with a projection of the second air deflector (14) onto the straight line along the third direction.

6. The air conditioner according to claim 5, wherein the second direction is a horizontal direction, and the third direction is a vertical direction.

7. The air conditioner according to any one of claims 1 to 4, wherein the first air deflector (13) is arc-shaped, and/or the second air deflector (14) is arc-shaped.

8. The air conditioner according to claim 7, wherein a convex first air-deflecting surface (101) is formed on an outer side of the first air deflector (13), and a concave second air-deflecting surface (102) is formed on an inner side of the first air deflector (13); and/or
a convex third air-deflecting surface (201) is formed on an outer side of the second air deflector (14), and a concave fourth air-deflecting surface (202) is formed on an inner side of the second air deflector (14).

9. The air conditioner according to any one of claims 1 to 4, wherein the first air deflector (13) is provided with a first through hole for leading out airflow; and/or
the second air deflector (14) is provided with a second through hole for leading out airflow.

10. The air conditioner according to any one of claims 1 to 4, wherein a rotation range of the first air deflector (13) does not exceed an outer contour of the air-conditioner main body (11); and/or
a rotation range of the second air deflector (14) does not exceed the outer contour of the air-conditioner main body (11).
